# EUROPEAN PATENT APPLICATION

(11) **EP 2 523 089 A2**
(43) Date of publication of application: **14.11.2012**
(21) Application number: 12162233.6
(22) Date of filing: 29.03.2012
(51) Int. Cl.: G06F 3/048

(54) **Data input method and apparatus for mobile terminal having touchscreen**

(30) Priority: 12.05.2011 KR 20110044326
(71) Applicant: Samsung Electronics Co., Ltd., Suwon-si, Gyeonggi-do, 443-742 (KR)
(72) Inventor: Kim, Kyu Sung, Gyeonggi-do (KR); Yang, Hui Chul, Gyeonggi-do (KR); Wang, Jee Yeun, Gyeonggi-do (KR); Kwon, Joong Hun, Gyeonggi-do (KR)
(74) Representative: Jenkins, Richard Gavin

(57) **Abstract**

A data input method and apparatus for a mobile terminal having a touchscreen. The data input method includes: displaying, upon activation of a data input menu, a data input field; displaying a completed input zone providing at least one already entered data item and displaying a combination input zone providing numeric and character keys; and entering, when data is selected using one of the completed input zone and the combination input zone, the selected data in the data input field.

## Description

### BACKGROUND OF THE INVENTION

### Field of the Invention

The present invention relates to a data input method and apparatus for a mobile terminal. More particularly, the present invention relates to a data input method and apparatus for a mobile terminal to display characters for devices without physical keybuttons.

### Description of the Related Art

Recently, mobile terminals have evolved into multimedia devices supporting various supplementary services related to electronic organizers, games, and schedule management. Given such a trend, it is essential to provide mobile terminals with user interfaces that enable easy management and utilization of various supplementary services beyond the mere selection of telephone numbers or letters for a text message.

In most cases, in order to enter data in a data input field using a mobile terminal, the mobile terminal displays a virtual keypad having numeric or character keys on the display unit. The user typically selects desired keys from the displayed keypad to enter data into the data input field.

As the number of mobile terminals having a touchscreen (in particular, smart phones) rapidly expands, such a simplistic data input scheme may become a hindrance to implementation of a more versatile and convenient user interface than known heretofore.

Hence, it is necessary to develop a method that enables the user of a mobile terminal to enter data in a more convenient manner than previously known.

### SUMMARY OF THE INVENTION

The present invention has been made to provide a data input method and apparatus that causes a mobile terminal to display both a completed input zone providing lists of already-entered characters and a combination input zone providing various numeric and character keys to thereby enable the user to enter data alternately utilizing the two input zones. The term "alternately" is to be construed to be any pattern of selected entry from both completed input zone and the combination input zone.

In accordance with an exemplary embodiment of the present invention, there is provided a data input method for a mobile terminal, preferably including: displaying, upon activation of a data input menu, a data input field; displaying a completed input zone providing at least one already entered data item and displaying a combination input zone providing a plurality of numeric and character keys; and entering, when data is selected using one of the completed input zone and the combination input zone, the selected data in the data input field.

In accordance with another exemplary embodiment of the present invention, there is provided a data input apparatus for a mobile terminal, preferably including: a touchscreen that displays and selects data to be entered in a data input field; and a control unit that controls a process of displaying, upon display of the data input field, a completed input zone providing at least one already-entered data item and displaying a combination input zone providing numeric and character keys, and entering, when data is selected using one of the completed input zone and the combination input zone, the selected data in the data input field.

According to an exemplary aspect of the present invention, during data input, the mobile terminal can display both a completed input zone providing lists of already-entered characters and a combination input zone providing numeric and character keys. Hence, the present invention provides a more convenient user interface that enables the user to enter data alternately utilizing the two input zones.

### BRIEF DESCRIPTION OF THE DRAWINGS

The exemplary aspects and advantages of the present invention will become more apparent to a person of ordinary skill in the art based on the following detailed description in conjunction with the accompanying drawings, in which:
FIG. 1 is a block diagram of a mobile terminal according to an exemplary embodiment of the present invention;
FIG. 2 illustrates a key input display unit in the mobile terminal of FIG. 1;
FIGS. 3 and 4 provide a flowchart of exemplary operation of a data input method according to another exemplary embodiment of the present invention;
FIG. 5 is a detailed flowchart of a step for displaying both a completed input zone and a combination input zone in the method of FIG. 3;
FIG. 6 is a flowchart of a procedure for mixing data selected using the combination input zone with data displayed in the completed input zone;
FIG. 7 is a screen representation illustrating the procedure of FIG. 6; and
FIGS. 8 and 9 are screen representations illustrating entering of data in a data input field using the completed input zone and the combination input zone.

### DETAILED DESCRIPTION

Hereinafter, exemplary embodiments of the present invention are described in detail with reference to the accompanying drawings. The same reference symbols are used throughout the drawings to refer to the same or like parts. Detailed descriptions of well-known functions and structures incorporated herein may be omitted to avoid obscuring an artisan's appreciation of the subject matter of the present invention with such well-known functions and structures.

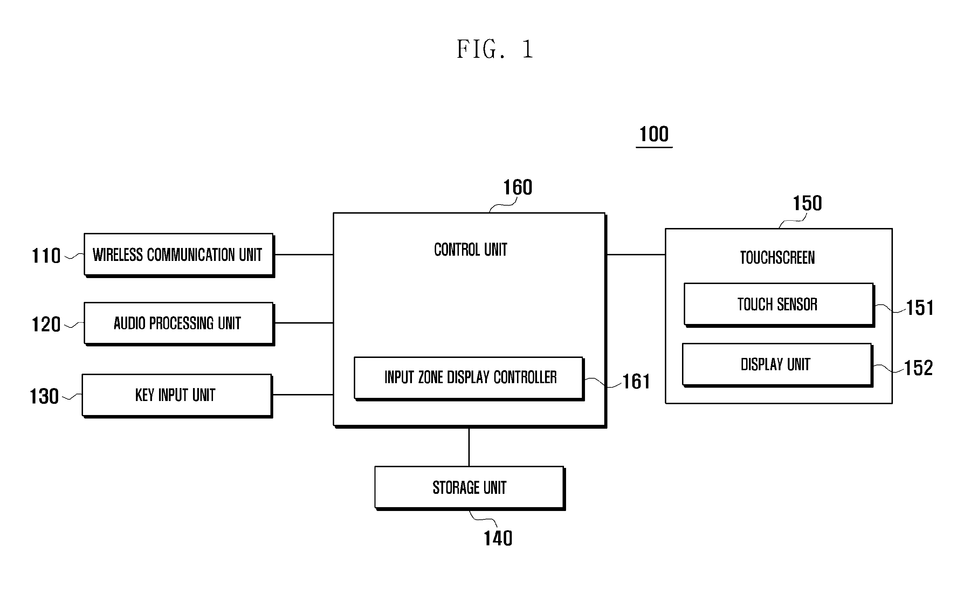

FIG. 1 is a block diagram of a mobile terminal 100 according to an exemplary embodiment of the present invention. As shown in FIG. 1, the mobile terminal 100 preferably includes a wireless communication unit 110, an audio processing unit 120, a key input unit 130, a storage unit 140, a touchscreen 150 and a control unit 160.

The wireless communication unit 110 performs data transmission and reception for the mobile terminal 100. The wireless communication unit 110 may include, for example, a radio frequency (RF) transmitter for upconverting the frequency of a signal to be transmitted and amplifying the signal, and an RF receiver for low-noise amplifying a received signal and downconverting the frequency of the received signal. The wireless communication unit 110 may forward data received through a wireless channel to the control unit 160, and transmit data from the control unit 160 through the wireless channel.

The audio processing unit 120 may preferably include a coder/decoder (codec). The codec may include a data codec for processing packet data and the like, and an audio codec for processing an audio signal such as a voice signal. The audio processing unit 120 converts a digital audio signal into an analog audio signal through the audio codec to reproduce the analog audio signal using a speaker, and converts an analog audio signal from a microphone into a digital audio signal through the audio codec.

The key input unit 130 generates an input signal corresponding to key manipulation by the user for controlling the mobile terminal 100 and sends the received input signal to the control unit 160. The key input unit 130 may include, for example, a keypad having numeric and direction keys, and function keys attached to sides of the mobile terminal 100. When the mobile terminal 100 can be operated using only the touchscreen 150, the key input unit 130 may be excluded or is optional.

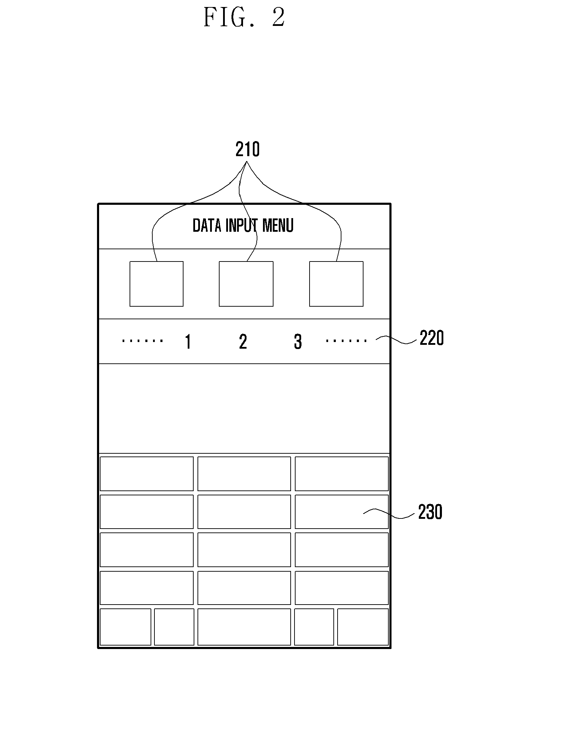

FIG. 2 illustrates one possible example of the key input display unit 130 in the mobile terminal 100 according to an exemplary embodiment of the present invention.

As shown in FIG. 2, when data entry in data input fields 210 is requested, the key input unit 130 may be used to input a display of any or all of fields 210, 220 and 230 on the display (when the screen is touch sensitive). Data that is entered via the data input fields 210 may be comprised of, for example, only numeric digits like year, month or date values, or only characters like contact names, or digits and characters like ID information or passwords. The data may also contain special characters such as '%' and '$'.

When data entry in the data input fields 210 is requested, the key input unit 130 may provide a display of both a completed input zone 220 and a combination input zone 230.

The completed input zone 220 provides sequentially displayed completed data, such as already-entered data, or data obeying a specific rule. Here, the term "completed data" refers to completed words or phrases that have independent meanings without help of other data. Completed data may be continuously displayed in up-down, left-right or circular directions. For example, words extracted by the user from a Web site or successive numerical values or characters (for example, year 2000, 2001, ...) may be displayed in the form of a continuous list in the completed input zone 220. When the key input unit 130 is realized using a touchscreen, a scrolling function may be provided in the completed input zone 220. In this case, data in the completed input zone 220 may be scrolled in up-down, left-right or, for example, in circular directions.

The combination input zone 230 may provide a virtual keypad, and is a region in which at least one of a keypad of digits, a keypad of characters and/or a keypad of special characters is displayed. In one exemplary embodiment, the combination input zone 230 may be configured in a QWERTY keyboard layout.

The storage unit 140 is preferable a non-transitory machine readable medium used to store programs and data needed for operation of the mobile terminal 100, and may include a program area and a data area. The program area stores an operating system that boots the mobile terminal 100 and controls the overall operation thereof, application programs for playing back multimedia content, and other application programs related to a camera, sound reproduction, and playback of still or moving images. The data area comprises an area of storage that stores data generated during the course of using the mobile terminal 100, and may store, for example, images, moving images, phonebooks and audio data. In particular, the storage unit 140 may store a program that displays both the completed input zone 220 providing lists of already entered data and the combination input zone 230 for entering desired numbers and characters in data entry mode.

As shown in FIG. 1, the touchscreen 150 includes a touch sensor 151 and a display unit 152. The touch sensor 151 detects a touch input of the user. The touch sensor 151 may be realized using a capacitive, resistive, infrared or pressure sensor. In the present invention, any sensor capable of detecting contact or pressure may be utilized as the touch sensor 151. The touch sensor 151 generates a touch signal corresponding to user touch and sends the touch signal to the control unit 160. The touch signal carries coordinate data of the touch point. When the user makes a touch-point move gesture, the touch sensor 151 generates a touch signal carrying coordinate data describing the path of the touch-point move and forwards the generated touch signal to the control unit 160.

In particular, the touch sensor 151 detects user input (for example, touch, multi-touch or drag) for entering data in the data input fields.

The display unit 152 may be realized using liquid crystal display (LCD) devices, organic light emitting diodes (OLED), or active matrix organic light emitting diodes (AMOLED), as just a few possible examples. The display unit 152 provides various information, including but not limited to menus, input data and function-setting data to the user in visual form. The display unit 152 may output any, some or all of a boot screen, an idle screen, a menu screen, a call handling screen and other application screens.

Although the mobile terminal 100 is depicted as having a touchscreen capability, the present invention is applicable to mobile terminals with or without a touchscreen capability. When the present invention is applied to a mobile terminal without a touchscreen capability, the function of the touchscreen 150 may be limited to that of the display unit 152.

The control unit 160 controls overall operations of individual components of the mobile terminal 100. In particular, during data entry to the mobile terminal 100, the control unit 160 may control a series of operations to display both the completed input zone 220 providing lists of already entered data and the combination input zone 230 for entering desired numbers and characters. To achieve this operation, the control unit 160 may include an input zone display controller 161.

The input zone display controller 161 detects activation of a data input menu. Here, the data input menu refers to a menu requiring data entry by the user, such as a menu for alarm setting, date and time setting, e-mail ID and password input or phonebook management. Upon detecting activation of a data input menu, the input zone display controller 161 controls the completed input zone 220 and the combination input zone 230 to be simultaneously displayed. The user may enter data alternately using the completed input zone 220 and the combination input zone 230.

In the case of multiple data input fields, when data entry in one data input field is completed, the input zone display controller 161 may indicate the necessity of data entry in the next data input field. To achieve this operation, after completion of data entry in one data input field, the input zone display controller 161 may automatically move the cursor or highlight to the next data input field. "Next" can be subsequent in position, selection or time.

The input zone display controller 161 may selectively display data in the combination input zone 230 according to the type of the current data input field. For example, when only numeric data such as a date value is enterable in the data input field, the input zone display controller 161 may control the combination input zone 230 to display only numeric digits. When data composed of digits, characters and special characters such as identification information or a password is enterable in the data input field, the input zone display controller 161 may control the combination input zone 230 to simultaneously display digits, characters and special characters.

With regard to the aforementioned description of selectively displaying data, the control unit 160 and the input zone display controller 161 are depicted as being separate entities. However, such separation is only provided to assist in an understanding of the entities. For example, the function of the input zone display controller 161 may be directly performed by the control unit 160.

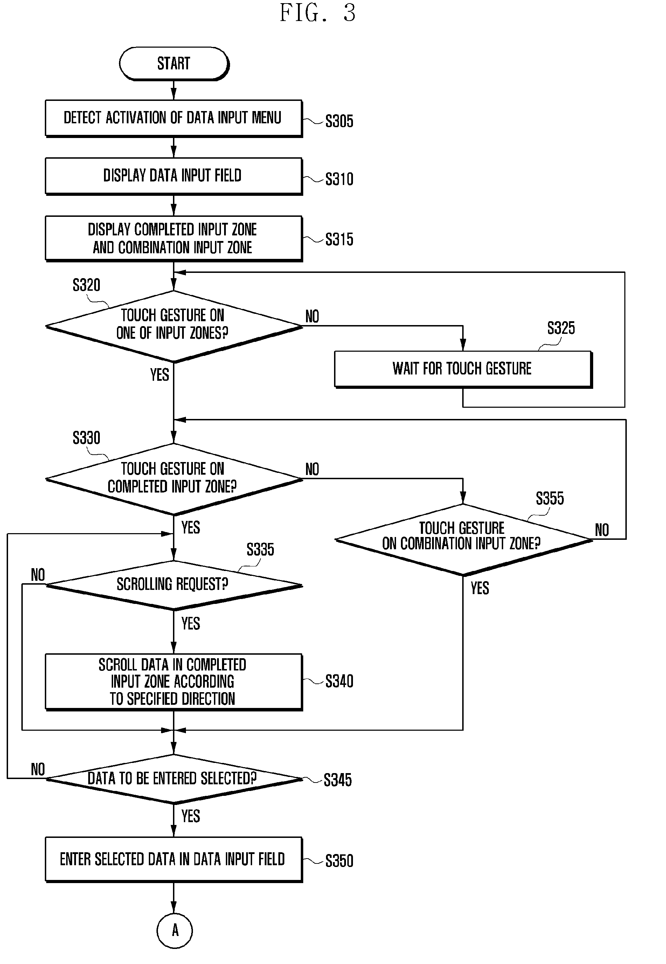

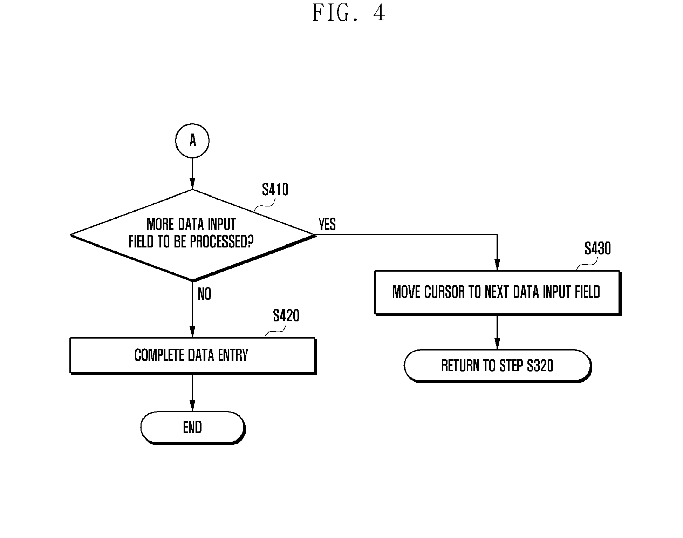

FIGS. 3 and 4 are a flowchart of a procedure for entering data in data input fields according to another exemplary embodiment of the present invention. In the following description, the display unit 152 and the key input unit 130 are both assumed to include a touchscreen capability.

Referring now to FIG. 3, at (S305) the control unit 160 of the mobile terminal 100 detects activation of a data input menu. The data input menu refers to a menu requiring data entry by the user, such as a menu for an alarm setting, a date and/or time setting or e-mail ID and password input. Upon detection of a data input menu activation, at (S310) the control unit 160 displays one data input field.

At (S315), the control unit 160 controls an operation to display both the completed input zone 220 and the combination input zone 230 on the display unit. The method of the present invention simultaneously displays the completed input zone 220 and the combination input zone 230, providing a more convenient and versatile interface to the user.

At (S320), the control unit 160 checks whether a touch gesture is made on one of the completed input zone 220 and the combination input zone 230. When no touch gesture is made, at (S325) the control unit 160 waits until a touch gesture is made on the touch screen.

When a touch gesture is made, then at (S330) the control unit 160 determines whether the touch gesture is made on the completed input zone 220. When it is affirmative that at (S330) that the touch gesture is made on the completed input zone 220, then at (S335) the control unit 160 determines whether the touch gesture corresponds to a scrolling request. When the touch gesture corresponds to a scrolling request, then at (S340) the control unit 160 scrolls the already entered data or data obeying a specific rule in the completed input zone 220 according to the detected direction. Therefore, in the completed input zone 220, old data having been displayed may be replaced by new data to be displayed.

With continued reference to FIG. 3, at (S345) the control unit 160 whether data to be entered is selected. When data to be entered is selected, at (S350) the control unit 160 controls an operation to enter the selected data in the data input field.

However, when at (S330), the touch gesture is not made on the completed input zone 220, then at (S355) the control unit 160 checks whether the touch gesture is made on the combination input zone 230. When the touch gesture is made on the combination input zone 230, the control unit 160 then performs step (S345) (previously described).

After data entry in the data input field, with reference to FIG. 4, at (S410), the control unit 160 checks whether a new data input field to be processed is present.

When the control unit determines that a new data input field to be processed is present, then at (S430) the control unit 160 indicates the next data input field to be processed. Here, the control unit 160 may automatically move the cursor or highlight to the next data input field. For example, for entry of a date, after a year value is entered in a data input field, the control unit 160 may automatically move the cursor or highlight to the next data input field for a month value.

At (S320) the method returns to (described earlier) to enter new data in the next data input field.

When at (S41 0) there is no more data input fields to be processed, then at (S420) the control unit 160 completes the data entry procedure.

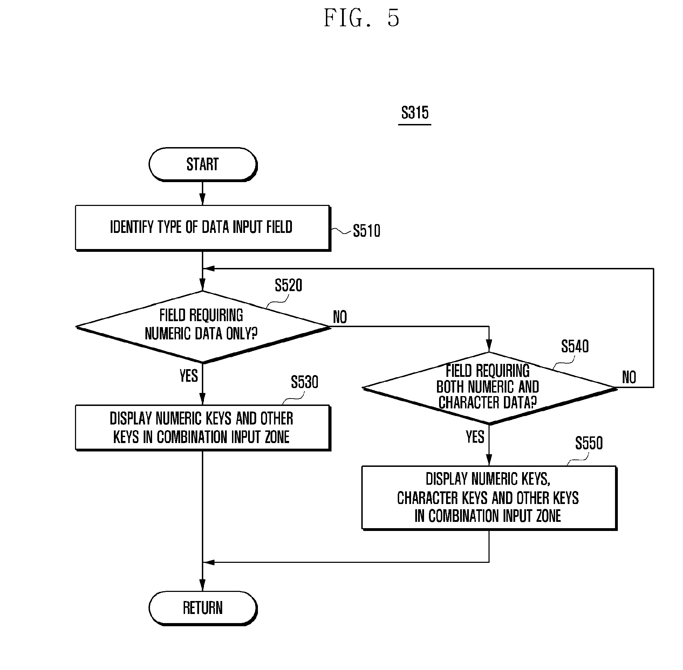

FIG. 5 is a detailed flowchart of step S315 for displaying both the completed input zone and the combination input zone in the method of FIG. 3.

Referring now to FIG. 5, when the activated data input menu includes a data input field, the control unit 160 identifies the type of the data input field (S510). The types of a data input field may be classified, for example, as shown in Table 1. Here, the contents of Table 1 are purely illustrations and other types of data input fields may be defined.

**[Table 1]**

| Type | Examples |
|---|---|
| Requiring numeric data only | Year, month, day, hour, account number, card number |
| Requiring character data only | Person's name |
| Requiring both numeric and character data | ID, password, search word for portal site |

At (S520), the control unit 160 checks whether or not the data input field is a field requiring numeric data only. When the data input field is a field requiring numeric data only, then at (S530) the control unit 160 controls an operation to display numeric keys and other keys in the combination input zone 230. Here, the other keys includes special character keys such as '%' and '$' and a switch key for switching to the character keypad.

When the data input field is not a field requiring numeric data only, then at (S540) the control unit 160 checks whether or not the data input field is a field requiring both numeric and character data. When the data input field is a field requiring both numeric and character data, the at (S550) the control unit 160 controls an operation to display numeric keys, character keys and other keys in the combination input zone 230.

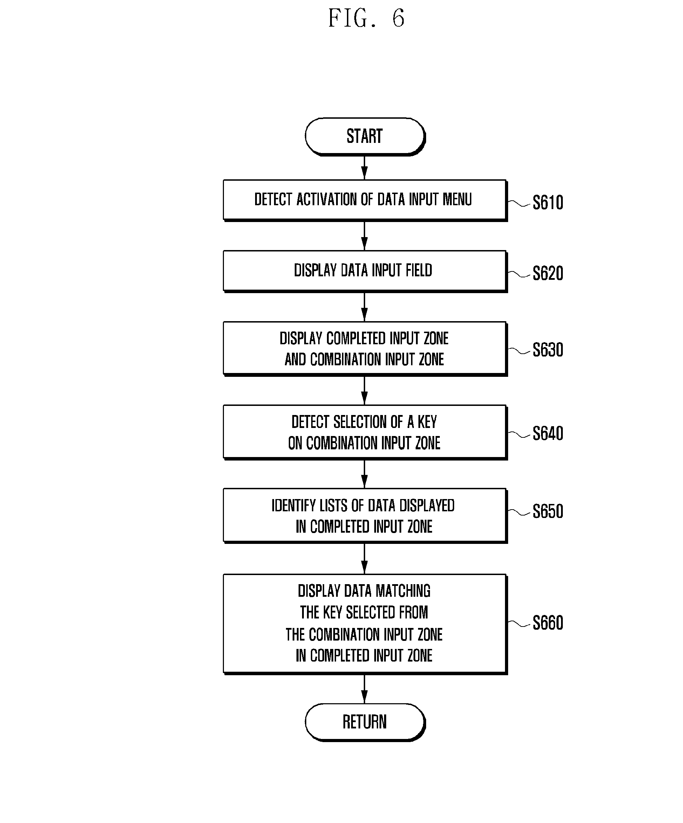

FIG. 6 is a flowchart of an exemplary procedure for mixing data selected using the combination input zone 230 with data displayed in the completed input zone 220.

Referring now to FIG. 6, at (S610) the control unit 160 of the mobile terminal 100 detects activation of a data input menu. Upon data input menu activation, at (S620) the control unit 160 displays one data input field. At (S630), the control unit 160 displays both the completed input zone 220 and the combination input zone 230.

At (S640), the control unit 160 detects selection of a key on the combination input zone 230. At (S650), the control unit 160 identifies lists of data displayed in the completed input zone 220. At (S660) the control unit 160 displays data corresponding to the key selected from the combination input zone 230 at step S640 in the completed input zone 220. The control unit 160 may display the corresponding data under the data input field.

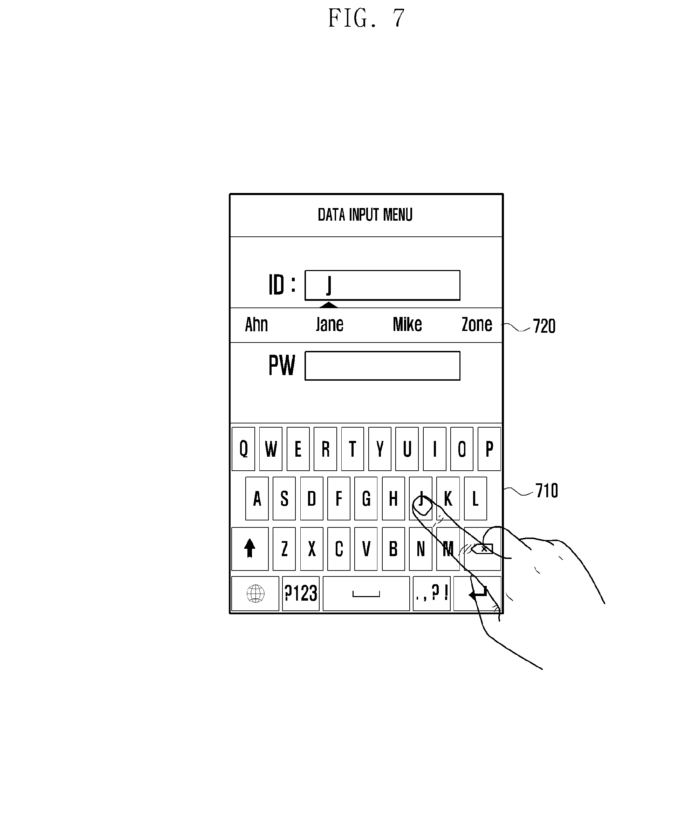

Here, when a data item displayed in the completed input zone 220 begins with the key selected from the combination input zone 230, such a beginning may be regarded as the displayed data item corresponding to the selected key. This operation is described in more detail in connection with FIG. 7.

FIG. 7 is a screen representation illustrating the exemplary procedure of FIG. 6.

As shown in FIG. 7, when a key 'j' is selected from the combination input zone 710, a data item "Jane" beginning with the selected key 'j', among data items displayed in the completed input zone 720, is displayed in the completed input zone 720. Here, the data item "Jane" is displayed immediately below the current data input field. A person of ordinary skill in the art should understand that the data item can be displayed in any position adjacent the current data input field, or in any position on the display, but immediately below the current data input field is a preferable position.

If a key 'm' were selected from the combination input zone 710, a data item "Mike" beginning with the selected key 'm', among data items displayed in the completed input zone 720, would be displayed immediately below the current data input field. If there were more than one data item beginning with "m", for example "Mary" and "Mike" could be displayed. Upon selection of a second letter one or the other (Mary or Mike, or possibly both) could disappear from the display.

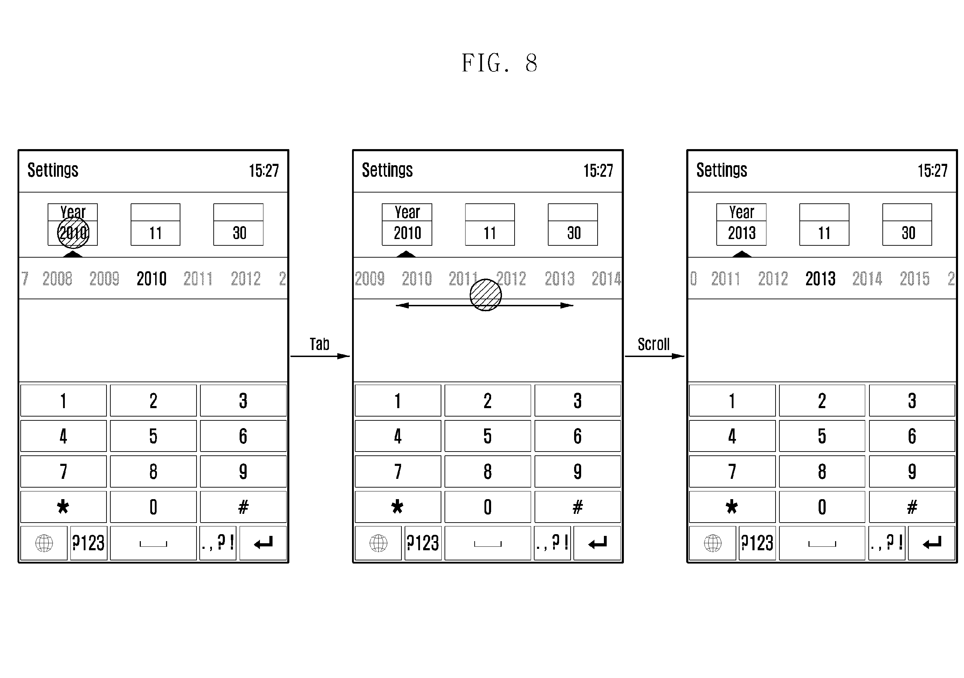

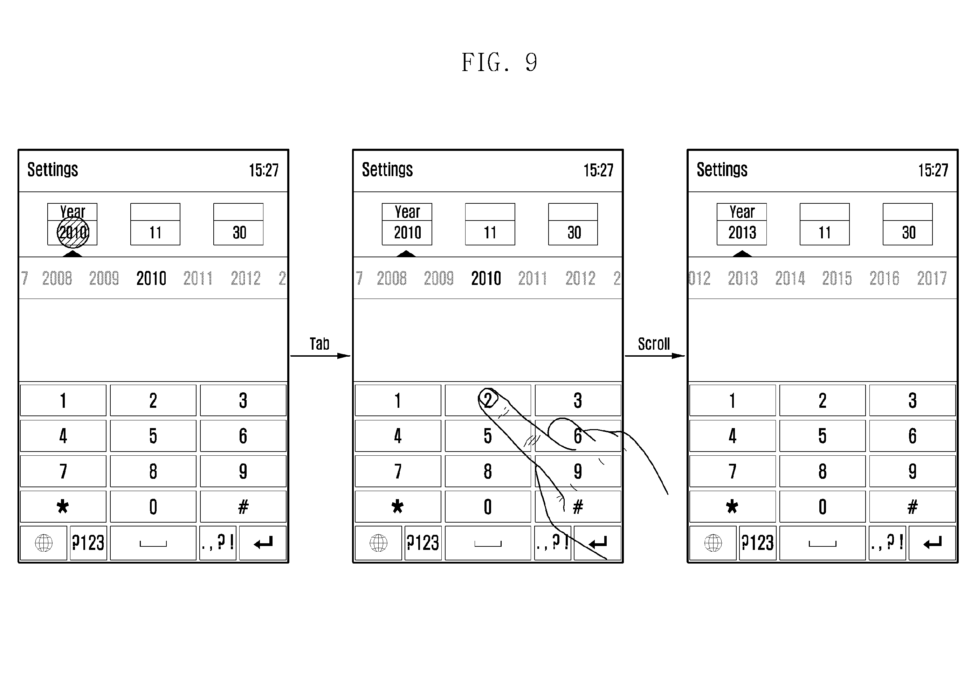

FIGS. 8 and 9 are screen representations illustrating entering of data in a data input field using the completed input zone and the combination input zone.

FIG. 8 illustrates entering of data in a data input field using the completed input zone. To enter a year value, the user touches the "year" data input field. Then, the mobile terminal 100 displays both the completed input zone providing consecutive year values such as 2008 and 2009 and the combination input zone providing numeric keys.

To enter a year value of 2013 using the completed input zone under the condition that the year value of 2013 is not yet visible in the completed input zone, the user may scroll the display to the right so that the desired value is visible in the completed input zone and then select "2013" displayed in the completed input zone.

FIG. 9 illustrates entering of data in a data input field using the combination input zone. To enter a year value, the user touches the "year" data input field. Then, the mobile terminal 100 displays both the completed input zone providing consecutive year values such as 2008 and 2009 and the combination input zone providing numeric keys.

In this case, the mobile terminal 100 may identify the type of the data input field and display a keypad in the combination input zone according to the identified type. In the case of FIG. 9, as the data input field is a "year" field, a keypad composed of numeric keys and other keys (including special character keys) may be displayed in the combination input zone. Then, the user may enter, for example, '2', '0', '1' and '3' in sequence using the corresponding keys displayed in the combination input zone. Here, the input data "2013" may be displayed immediately below the "year" data input field.

As described above, according to the present invention, during data input, the mobile terminal displays both a completed input zone providing lists of already entered characters and a combination input zone providing numeric and character keys. Hence, a more convenient user interface is provided that enables the user to enter data alternately utilizing the two input zones.

The above-described methods according to the present invention can be realized in hardware or as software or computer code that can be stored in a recording medium such as, for example, a CD ROM, a DVD, a RAM, thumbnail drive, a floppy disk, a flash storage, a hard disk, or a magneto-optical disk or downloaded over a network, so that the methods described herein can be executed by such software using a general purpose computer, or a special processor, microprocessor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined in the appended claims.

## Claims

1. A data input method for a mobile terminal, comprising:
displaying a data input field by a display unit, upon activation of a data input menu;
displaying by the display unit a completed input zone providing at least one previously-entered data item and displaying a combination input zone providing numeric and character keys; and
entering the selected data in the data input field, when data is selected using one of the completed input zone or the combination input zone.

2. The data input method of claim 1, further comprising requesting data entry for a next data input field, when multiple data input fields are present and data entry for one data input field is completed.

3. The data input method of claim 1, wherein displaying a combination input zone comprises displaying a keypad in the combination input zone, selected according to a type of the data input field.

4. The data input method of claim 3, wherein the type of the data input field comprises at least one of a numeric data field, a character data field, and a numeric and character data field.

5. The data input method of claim 1, wherein displaying a completed input zone comprises displaying the at least one previously-entered data item or displaying one or more data items that obey a specific rule in sequence in the completed input zone.

6. The data input method of claim 5, wherein the data items displayed in the completed input zone are moved in correspondence with a scroll input.

7. The data input method of claim 1, wherein entering the selected data in the data input field further comprises:
selecting a desired key from the combination input zone;
locating a completed data item having a beginning position that matches with the selected key from the completed input zone; and
displaying the completed data item in the completed input zone.

8. The data input method of claim 7, wherein the located completed data item is displayed adjacent the data input field.

9. A data input apparatus for a mobile terminal, comprising:
a touchscreen for displaying and selecting data for entry in a data input field; and
a control unit that controls a display of the data input field, a completed input zone providing at least one previously-entered data item and at the same time controls displaying a combination input zone providing numeric and character keys, and controls entry of the selected data in the data input field when data is selected using one of the completed input zone and the combination input zone.

10. The data input apparatus of claim 9, wherein the control unit controls an operation requesting data entry for a subsequent data input field, when multiple data input fields are present and data entry for one data input field is complete.

11. The data input apparatus of claim 9, wherein the control unit controls display by a keypad selected according to a type of the data input field in the combination input zone.

12. The data input apparatus of claim 11, wherein the type of the data input field comprises at least one of a numeric data field, a character data field, and a numeric and character data field.

13. The data input apparatus of claim 9, wherein the control unit controls an operation to display in the completed input zone the at least one previously-entered data item or data items obeying a specific rule in sequence in the completed input zone.

14. The data input apparatus of claim 13, wherein the data items displayed in the completed input zone are moved in response to a scroll input.

15. The data input apparatus of claim 9, wherein the control unit controls an operation to locate a completed data item beginning with a selected key from the completed input zone, and display the completed data item in the completed input zone when a specific key is selected from the combination input zone, and wherein the located completed data item is displayed adjacent the data input field.
